# FASCICULE DE BREVET EUROPEEN

(11) **EP 1 031 033 B1**
(45) Date de publication et mention de la délivrance du brevet: **05.10.2005**
(21) Numéro de dépôt: 98952483.0
(22) Date de dépôt: 12.11.1998
(51) Int. Cl.: G01N 30/00, G01N 1/34

(54) **PROCEDE ET APPAREILLAGE POUR LA MESURE DES VOLATILS GLOBAUX**
VERFAHREN UND VORRICHTUNG ZUR INTEGRALEN MESSUNG DER FLÜCHTIGEN BESTANDTEILE
METHOD AND EQUIPMENT FOR MEASURING GLOBAL VOLATILE SUBSTANCES

(30) Priorité: 15.11.1997 CH 262897
(43) Date de publication de la demande: 30.08.2000
(73) Titulaire: Brechbühler AG, 8952 Schlieren (CH)
(72) Inventeur: VILLETTAZ, Jean-Claude, CH-1950 Sion (CH); LUISIER, Jean-Luc, CH-1964 Conthey (CH); AZODANLOU, Ramin, CH-1820 Montreux (CH)
(74) Mandataire: Breiter, Heinz
(86) Numéro de dépôt international: PCT/CH1998/000484
(87) Numéro de publication internationale: WO 1999/026063

(56) Documents cités:
- WO-A-91/15745
- US-A- 3 797 318
- US-A- 4 980 294
- US-A- 5 435 169

## Description

### DESCRIPTION DE L'INVENTION

L'invention concerne un procédé et un appareillage pour mesurer des substances volatiles de façon globale, sans séparation préalable des différents composés. Par "volatils globaux" on veut signifier qu'il ne s'agit pas forcément de la totalité des volatils, mais surtout d'une fraction représentative de l'ensemble des volatils dégagés par un objet. Ces substances volatiles constituent généralement l'odeur d'un aliment ou d'un objet. La mesure de l'odeur d'un aliment ou d'un objet dans sa globalité représente un gros intérêt et ceci tant sur le plan quantitatif (intensité de l'odeur) que qualitatif (nature des composés constituant l'odeur). S'il est possible, pour autant bien entendu que l'on connaisse précisément les substances clé, de doser les composés constituant le profil aromatique d'un produit, il n'était, jusqu'au développement et la mise au point des techniques décrites ci-dessous, pas possible d'évaluer la fraction volatile dans sa globalité. Fort de ce constat, à la lumière des résultats que nous avons obtenu grâce à notre invention, nous pouvons considérer qu'il est actuellement possible de mesurer et de doser d'une façon reproductible et fiable cette notion de "parfum".

Le document US,A 5435169 concerne la mesure en continu de polluants organiques. Dans ce contexte un flux gazeux, en particulier les substances volatiles qui le constitue, font l'objet d'une analyse. Il est mentionné que le peak obtenu sans séparation préalable contient toutes les substances separées (some des peaks), il n'a jamais été mentionné que la surface de ce peak était directement corrélée avec une intensité sensorielle.

Selon le document US, A 4980294 une certaine quantité d'air, constituant l'espace de tête, est passée au travers d'un dispositif d'adsorption dans le but d'extraire sélectivement le TMA, substance reconnue comme indicateur de l'état de fraicheur des poissons. Cette substance est ensuite analysée spécifiquement et le résultat est donné de façon quantitative.

Dans le document WO, A1 91/15745 les composants d'un système SPME sont présentés. Ce système, largement utilisé en chimie analytique, est constitué d'une fibre élaborée à partir de matériaux plus ou moins poreux, placée à l'intérieur d'un dispositif fonctionnant comme une seringue. Après adsorption cette fibre est introduite dans l'injecteur d'un chromatographe en phase gazeuse pour la désorption des substances adsorbées et analyse de celles-ci après séparation sur une colonne ad hoc.

L'objet de l'invention est de créer un procédé et un appareillage du type cité au début qui permettent d'obtenir des signaux très reproductibles et également en accord avec les résultats de l'analyse sensorielle. L'objet de l'invention est résolu suivant la caractéristique des revendications 1 à 5 pour le procédé et 6 à 10 pour l'appareillage.

La nouveauté de l'invention consiste à capter des volatils, à désorber les molécules captées, à les transférer sans les séparer et à les quantifier au moyen de détecteurs. La diversité des signaux est obtenue soit en variant les capteurs, soit en variant les possibilités de détection.

Ces concepts peuvent être étendus à des substances volatiles en solution par adsorption de ces substances sur des capteurs.

Dans le but de doser les volatils globaux, sans séparation préalable des différents composés, l'idée nous est venue de capter ces substances sur une membrane, puis de désorber cette membrane directement dans un détecteur. A notre grande surprise, le signal livré par le détecteur s'est avéré non seulement très reproductible mais également en parfait accord avec les résultats de l'analyse sensorielle.

Cette technique répond donc parfaitement aux attentes des nombreux chercheurs travaillant dans ce domaine. Dans une récente publication datée de mars 1997, parue dans le N° 129 du Ctifl (Comité technique interprofessionnel pour les fruits et légumes), relative à la qualité gustative des pêches et nectarines, les auteurs (Danielle Scandella, Etienne Krauteler, Sophie Vénien) déplorent que la mesure des volatils globaux n'est pas encore possible "Les mesures physico-chimiques de la fermeté, du sucre et de l'acidité ne suffisent pas à elles seules à identifier la qualité. La notion de parfum, très importante, n'est pas encore détectable par un appareil."

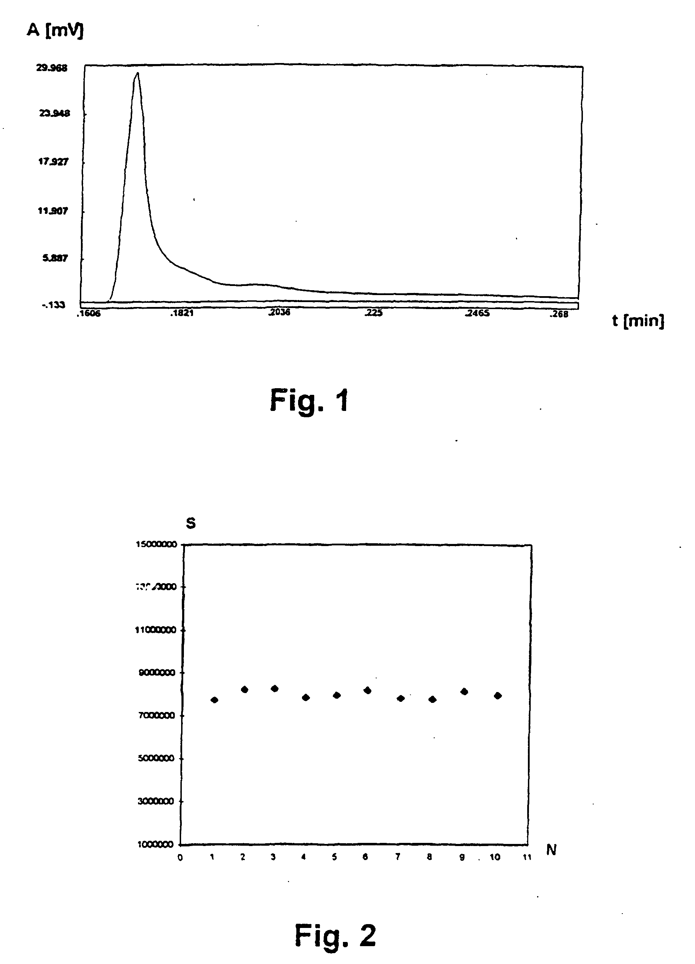

L'appareil que nous proposons est constitué de cinq parties logiques dont certaines peuvent être combinées lors de la construction physique : (fig.1 et 7)
1.- Un système de production d'un espace de tête reproductible Il s'agit d'un système, soit automatisé soit manuel permettant de dégager dans un récipient un espace de tête contenant l'arôme de l'objet que l'on veut analyser.
2.- Un système de captage de cet espace de tête : SPME (Solid Phase Micro Extraction), systèmes "purge and trap", "thermal desorption tube", membrane adsorbante, etc.
3.- Un système de désorption thermique de ce qui a été capté, adapté au système de captage. Un gaz inerte entraîne les volatils désorbés vers le détecteur.
4.- Un système de détection. On distingue des détecteurs universels comme le détecteur à ionisation de flamme, le détecteur à capture d'électrons, le détecteur de conductivité thermique, le détecteur à résistivité différentielle, le détecteur à photométrie de flamme et le détecteur à spectrométrie de masse.
5.- Un système d'évaluation basé sur une interprétation mathématique du signal. L'interprétation se base d'une part sur la surface du signal, qui est une mesure de la quantité totale des volatils désorbés, d'autre part sur le profil du signai dans le temps, qui est en rapport avec la qualité du signal. Lorsque le détecteur est un spectromètre, le spectrogramme de masse fait partie du signal.

En résumé on aura donc les éléments suivants (principe du système de mesure des volatils globaux):
- Système de production des volatils dans un espace de tête
- Captage des volatils par adsorption
- Désorption des volatils et entraînement par un gaz
- Détection globale
- Interprétation (mathématique et statistique) des signaux obtenus

### EXEMPLES

Ces exemples présentent quelques applications utilisant divers systèmes de capture, de désorption et de détection. Les exemples cités ne couvrent pas, et de loin, l'ensemble des applications possibles de notre invention, mais donnent un aperçu de ses possibilités et résument les principaux résultats obtenus.

### 1. SYSTÈMES DE CAPTURE DES VOLATILS GLOBAUX

Les substances volatiles, dégagées dans le système d'espace de tète, seront captées sur des surfaces adsorbantes. Ces surfaces peuvent être par exemple des SPME (Solid Phase Micro Extraction), des tubes adsorbants, des systèmes adsorbants "purge and trap", ou des surfaces modifiées chimiquement de façon à obtenir une adsorbtion optimale des volatils pour application de substances connues de l'homme du métier. Par chauffage, ces surfaces libèrent les substances volatiles captées, qui sont ensuite conduites dans le détecteur par entraînement au moyen d'un gaz inerte.

En détaillant les systèmes de captage des volatils, on trouve ainsi des systèmes basés sur :
a la technologie de la SPME (Solid Phase Micro Extraction). Il est connu que la SPME se prête bien à des analyses quantitatives. Elle permet d'adsorber les volatils,
b des systèmes connus en chromatographie en phase gazeuse sous les noms de "purge and trap" (purge et adsorption) et "head space" (espace de tête),
c des membranes. L'espace de tête à analyser peut être adsorbé à la surface de membranes de structures diverses telles que celles utilisées pour le nez électronique.

### 2. SYSTÈMES DE DÉSORPTION ET RELARGAGE

Le but de la désorption est de dégager les substances volatiles du système de captage et de les transporter vers le détecteur. On aura plusieurs types de désorbeurs :
a SPME: lorsque pour le captage des volatils on utilise une SPME, on peut utiliser comme désorbeur un injecteur à septum. On peut soit désorber directement dans le flux de gaz porteur soit le faire en l'absence d'un tel flux et rétablir celui-ci après désorption.
b systèmes purge and trap et head space: dans ce cas le système de désorption utilisé est généralement développé par le fabricant du système head space ou purge and trap.

Les substances volatiles désorbées sont ensuite conduites au travers d'un tube dans le détecteur, sans aucune séparation. Un flux de gaz inerte assure le transport des volatils désorbés (système de relargage).

### 3. APPLICATIONS

L'appareillage utilisé est composé d'un capteur fait d'une SPME, d'un désorbeur composé d'un injecteur avec septum, relié directement à un détecteur à ionisation de flamme par un capillaire pas ou peu absorbant. L'interprétation est effectuée en mesurant la surface du signal. Un exemple du signal obtenu est donné dans la figure 1 montrant l'amplitude A en millivolt (mV) en fonction du temps t en minutes (min)

### A) REPRODUCTIBILITE DE LA MESURE

Dans un ballon de 1L, maintenu à une température constante de 20 °C, on a placé une quantité déterminée (200g) de fraises. Après stebilisation de l'espace de tête durant une demie-heure, une SPME (Polydiméthylsiloxane 100µm, Supelco Co., Bellefonte, PA) est immergée dans cet espace de tête, à travers un septum, pour une durée de 5 minutes. La SPME est ensuite désorbée dans un injecteur à septum maintenu à 200°C durant toute la mesure. Un courant d'hélium de 5 ml/min entraîne les substances volatiles à travers un tube capillaire (longueur 200mm, diamètre interne 0.1mm ; N° 160-2630 J&W, New Brighton (Minn), pression de l'hélium : 150 kPa). La température de l'injecteur est maintenue à 200 °C. Le détecteur utilisé est un détecteur à ionisation de flamme (FID) de la firme Carlo Erba, la température de travail est maintenue constante à 250 °C. Le signal, mesuré comme la surface d'un pic au moyen du programme Chrom Card (Fisons, Milano), est très reproductible (tableau 1). La figure 2 représente la surface des signaux S (aire) en fonction des numéros d'essais N 1 à 10. Elle illustre bien la réproductibilité de la mesure.

**Tableau 1.**

| Surfaces des signaux et évaluation statistique des résultats | |
|---|---|
| N° d'essai | Surface du signal |
| 1 | 7738041 |
| 2 | 8233225 |
| 3 | 8258000 |
| 4 | 7860169 |
| 5 | 7950000 |
| 6 | 8164000 |
| 7 | 7797004 |
| 8 | 7772511 |
| 9 | 8140915 |
| 10 | 7977580 |
| Moyenne | 7951739 |
| Ecart type | 155972 |
| Coefficient de variation | 1.96% |

### B) HÉTÉROGÉNÉITÉ D'UN LOT DE FRAISES

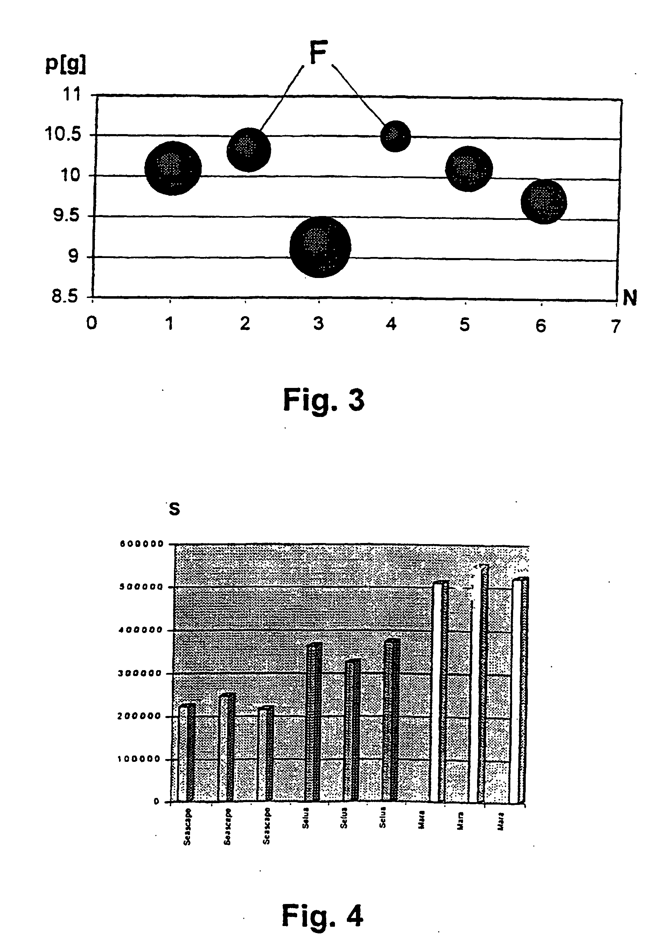

Le dispositif expérimental correspond à celui décrit sous 3.3 A) sauf que le volume du récipient (150 ml) à été adapté au volume de l'échantillon. Chaque fraise d'un poids d'environ 10 g. donne un signal d'intensité différente (tableau 2). La figure 3 montre le poids p des fraises et leur intensité représentée par des aires F en fonction des numéros d'essais N 1 à 6.

**Tableau 2.**

| Surfaces des signaux et évaluation statistique des résultats | |
|---|---|
| Poids de la fraise (g) | Surface du signal |
| 10.1 | 70016 |
| 10.33 | 46320 |
| 9.13 | 91711 |
| 10.51 | 21152 |
| 10.12 | 49966 |
| 9.72 | 49727 |
| Aire totale | 328 892 |
| poids totaux (g) | 59.91 |
| Moyenne | 54815 |
| Ecart-type | 23862 |
| Coefficient de variation | 43.53% |

### C) VOLATILITES GLOBAUX LIBERES PAR DIFFERENTES VARIÉTÉS DE FRAISES

Le dispositif expérimental correspond à celui décrit sous 3.3A) à l'exception de la température de captage, qui est de 37 °C. L'essai a été conduit à triple.

Lorsqu'on mesure avec le dispositif décrit ci-dessus différentes variétés de fraises, on obtient des signaux de surfaces différentes pour chaque variété. L'analyse sensorielle, effectuée par un panel de 10 dégustateurs semi-entrainés confirme le fait que la fraise Mara est nettement plus odorante que les fraises Seula et Seascape (tableau 3). La figure 4 représente la surface des signaux (aire) obtenus avec les fraises Seascape. Seula et Mara indiquent également la reproductibilité de la mesure des volatils globaux libérés. Nos mesures sont donc en parfaite corrélation avec l'analyse sensorielle.

**Tableau 3.**

| Surfaces des signaux et évaluation statistique pour 3 variétés de fraises | | | | | |
|---|---|---|---|---|---|
| Variété | Moyenne | Ecart type | Coeff. de variation | %Brix | pH |
| Seascape | 227'498 | 16'288 | 7.16 | 8.9 | 3.31 |
| Seula | 352'316 | 25'024 | 7.1 | 8.8 | 3.54 |
| Mara | 527'380 | 20'385 | 3.87 | 9.2 | 3.38 |

### E) DIFFERENTES FIBRES SPME

Le dispositif expérimental correspond à celui décrit sous 3.3A). Les fibres SPME suivantes (Supelco Co, Bellefonte, PA) sont utilisées : Polydiméthylsiloxane (PDMS), films de différentes épaisseurs, 100, 30, 7 µm, Polyacrylate (PA) 85µm, Carbowax/divinylbenzène (DVB) 60 et 65 µm et PDMS/carboxene 75µm. L'utilisation de plusieurs fibres permet de créer un profil qui représente bien les volatils du produit analysé en fonction de la sélectivité de la fibre (tableau 4).

**Tableau 4.**

| Mesure des volatils globaux de la fraise par différentes fibres | |
|---|---|
| Fibres | Surface de signal |
| PDMS 100µm | 131381 |
| PDMS 30µm | 45304 |
| PDMS 7µm | 40258 |
| PA 85 µm | 44773 |
| PDMS/DVB 65 µm | 1587628 |
| PDMS/Carboxene 75 µm | 2375237 |
| Carbowax/PDMS 65 µm | 296289 |

### F) DIFFERENTES ESPECES DE MIEL

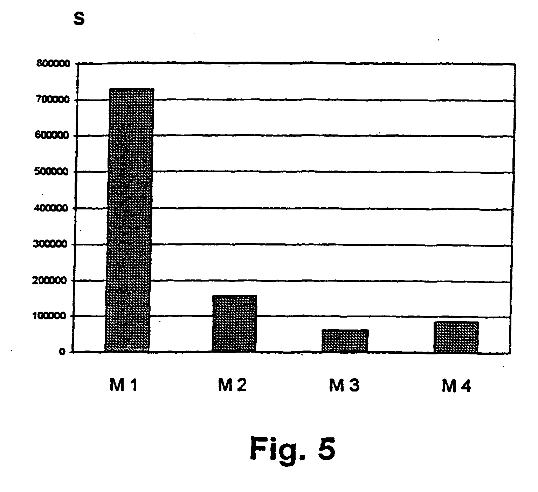

Le dispositif expérimental correspond à celui décrit sous 3.3A) sauf que l'essai se fait avec 60 g de miel, dans un récipient de 100 ml. La surface du signal est différente pour chaque miel. Elle correspond bien au classement sensoriel de ces miels quant à leur intensité aromatique (tableau 5). La figure 5 représente graphiquement la surface des signaux S (aire) en fonction des différents types de miels M selon les données du tableau 5.

**Tableau 5.**

| Mesure des volatils globaux de differents miels | | | |
|---|---|---|---|
| Désignation | | Surface du signal | Intensité sensorielle (rang) |
| Miel de sapin | M 1 | 727830 | 1 |
| Miel de campagne | M 2 | 157894 | 2 |
| Miel de montagne | M 3 | 61297 | 4 |
| Miel de fleurs | M 4 | 84916 | 3 |

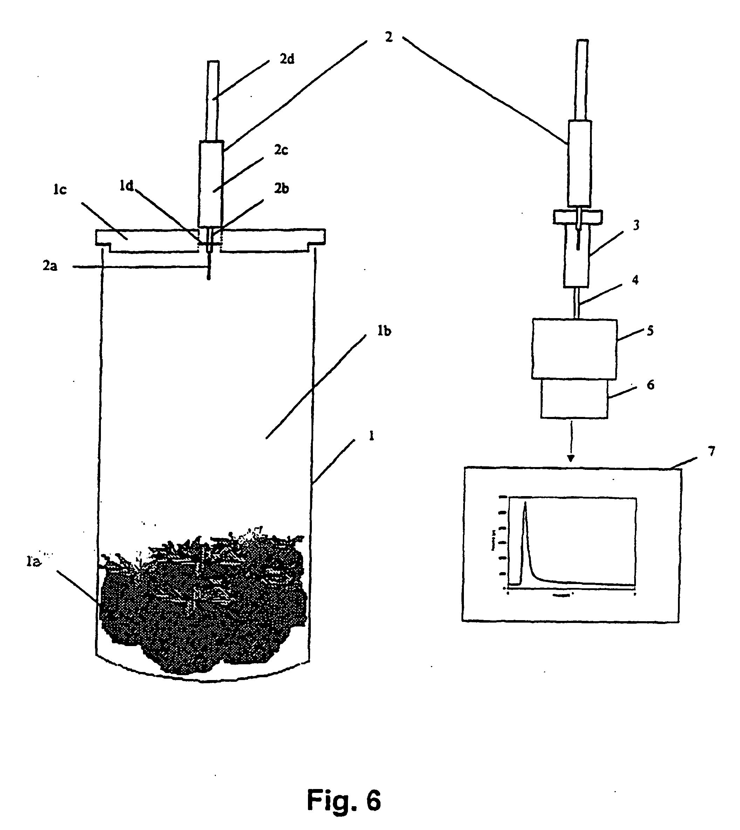

### DESCRIPTION DU FONCTIONNEMENT DE LA FIGURE 6

L'échantillon à analyser la est placé dans un récipient 1; ce dernier est ensuite fermé avec un couvercle 1c muni d'un septum 1d. Après un temps d'équilibrage, un système de captage 2 ressemblant à une seringue contenant une fibre 2a appropriée est introduite au travers du septum 1d. Une fois que le guide 2b du système de captage se trouve à l'intérieur du récipient, la fibre adsorbante est sortie au moyen d'un bouton poussoir 2d. Après un temps de contact entre la fibre et la phase gazeuse de l'espace de tète 1b la fibre est rentrée à l'intérieur du guide. Le système de captage 2 est ensuite retiré du récipient et introduit immédiatement dans le système de désorbtion 3. Une fois la seringue introduite dans le système de désorbtion, la fibre est sortie à nouveau du guide à l'aide du bouton poussoir et la désorbtion a lieu sous des conditions appropriées. Les substances volatiles désorbées sont transférées par un gaz porteur dans le détecteur 5 au travers d'un tube capillaire 4. Le signal du détecteur est ensuite traité par un système d'évaluation 6 et les résultats sont exprimés sous une forme graphique 7.

### LÉGENDE POUR LA FIGURE 6 « APPAREILLAGE DE MESURE DES VOLATILS GLOBAUX »

- 1): Récipient contenant l'échantillon à analyser
- 1a): Echantillon à analyser (fraises dans le cas présent)
- 1b): Espace de tête
- 1c): Couvercle
- 1d): Septum
- 2): Système de captage
- 2a): Fibre
- 2b): Guide
- 2c): Corps de seringue
- 2d): Bouton poussoir
- 3): Système de désorption
- 4): Tube capillaire
- 5): Système de détection
- 6): Système d'évaluation pour l'interprétation des signaux
- 7): Résultats donnés sous forme d'un signal

## Revendications

1. Procédé pour mesurer des substances volatiles de façon globale, sans séparation préalable des différents composés,
**caractérisé en ce que**
les volatils produits dans un espace de tête (1b) sont captés par adsorption sur des surfaces adsorbantes, les substances captées sont transportées dans un système de désorption, désorbées directement dans un détecteur (5) ou désorbées et entraînées, au moyen d'un gaz inerte, vers un détecteur (5) à travers un tube capillaire (4) pas ou peu séparant, pour une détection globale et ensuite une analyse mathématique et/ou statistique des signaux obtenus, à l'occasion de quoi le signal livré par le détecteur s'avère reproductible et en accord avec les résultats de l'analyse sensorielle.

2. Procédé selon la revendication 1, **caractérisé en ce que** les substances volatiles, de préférence l'odeur d'un aliment ou d'un objet dans sa globalité, sont produites dans un espace de tête (1b).

3. Procédé selon la revendication 1 ou 2, **caractérisé en ce que** les surfaces adsorbantes sont chauffées pour désorber les substances volatiles.

4. Procédé selon l'une des revendications 1 à 3, **caractérisé en ce que** les signaux obtenus (7) sont interprétés en mesurant leur intensité et/ou leur forme.

5. Appareillage de mesure des volatils globaux utilisant le procédé selon l'une des revendications 1 à 4, **caractérisé en ce qu'**il comprend un espace de tête (1b) pour dégager les substances volatiles, un système de captage (2) de ces substances volatiles, un système de désorption (3) adapté au système de captage (2), un système de détection (5) et un système d'évaluation (6) pour l'interprétation des signaux obtenus (7).

6. Appareillage selon la revendication 5, **caractérisé en ce que** le système de captage (2) des volatils est basé sur au moins une SPME (Solid Phase Micro Extraction), des membranes, des systèmes adsorbants « purge and trap », des tubes adsorbants ou des surfaces modifiées chimiquement.

7. Appareillage selon la revendication 5 ou 6, **caractérisé en ce que** pour un système SPME, le désorbeur (3) est un injecteur à septum.

8. Appareillage selon l'une des revendications 5 à 7, **caractérisé en ce que** le désorbeur thermique est un système de relargage, de préférence programmable.

9. Appareillage selon l'une des revendications 5 à 8, **caractérisé en ce que** le détecteur est du type détecteur à ionisation de flamme, conductivité thermique, résistivité différentielle, azote phosphore, capture d'électron ou spectrométrie de masse.

## Patentansprüche

1. Verfahren zur globalen Bestimmung von flüchtigen Substanzen ohne vorhergehende Trennung der verschiedenen Komponenten,
**dadurch gekennzeichnet, dass**
die in einem Hauptvolumen (1 b) erzeugten flüchtigen Substanzen auf adsorbierenden Oberflächen eines Aufnehmersystems (2) aufgefangen werden, die aufgefangenen Substanzen mit dem Aufnehmersystem (2) in ein Desorptionssystem (3) transportiert, in einem Detektor (5) direkt desorbiert oder desorbiert und mittels eines inerten Gases durch ein nicht oder wenig trennendes Kapillarrohr (4) zu einem Detektor (5) mitgenommen werden, wo sie gesamthaft gemessen und anschliessend die erhaltenen Signale mathematisch und/oder statistisch analysiert werden, wobei das durch den Detektor gelieferte Signal sich als reproduzierbar und in Übereinstimmung mit den Resultaten der empfindungsgemässen Analyse erweist.

2. Verfahren nach Anspruch 1, **dadurch gekennzeichnet, dass** die flüchtigen Substanzen, vorzugsweise der Geruch eines Lebensmittels oder eines Gegenstandes in seiner Gesamtheit, in einem Kopfraum (1b) erzeugt werden.

3. Verfahren nach Anspruch 1 oder 2, **dadurch gekennzeichnet, dass** die Adsorptionsoberflächen zur Desorption der flüchtigen Substanzen erwärmt werden.

4. Verfahren nach einem der Ansprüche 1 bis 3, **dadurch gekennzeichnet, dass** die erhaltenen Signale interpretiert werden, indem ihre Intensität und/oder ihre Form gemessen wird.

5. Vorrichtung zur globalen Bestimmung von flüchtigen Substanzen mit dem Verfahren nach einem der Ansprüche 1 bis 4, **dadurch gekennzeichnet, dass** sie ein Hauptvolumen (1 b) für das Freisetzen der flüchtigen Substanzen, ein Aufnehmersystem (2) dieser flüchtigen Substanzen, ein an das Aufnehmersystem (2) angepasstes Desorptionssystem (3), ein Detektionssystem (5) und ein Evaluationssystem (6) für die Auswertung der erhaltenen Signale (7) umfasst.

6. Vorrichtung nach Anspruch 5, **dadurch gekennzeichnet, dass** das Aufnehmersystem (2) der flüchtigen Stoffe auf wenigstens einem SPME (Solid Phase Micro Extraction), Membranen, Adsorptionssystemen "purge and trap", adsorbierenden Rohren und chemisch modifizierten Oberflächen basiert.

7. Vorrichtung nach Anspruch 5 oder 6, **dadurch gekennzeichnet, dass** die Desorptionseinrichtung (3) für ein SPME-System ein Injektor mit Septum ist.

8. Vorrichtung nach einem der Ansprüche 5 bis 7, **dadurch gekennzeichnet, dass** die thermische Desorptionseinrichtung ein vorzugsweise programmierbares Aussalzungssystem ist.

9. Vorrichtung nach einem der Ansprüche 5 bis 8, **dadurch gekennzeichnet, dass** das Messsystem ein Flammionisationsdetektor, ein thermischer Leitfähigkeitsdetektor, ein Differential-Widerstandsdetektor, ein Stickstoff- Phosphordetektor, ein Elektronendetektor oder ein Massenspektrometer ist.

## Claims

1. Method for measuring volatile substances in a global manner, with no prior separation of the different compounds, **characterised in that** the volatiles produced in a head space (1b) are collected by adsorption on adsorbent surfaces, the collected substances are transported into a desorption system (3), desorbed directly in a detector (5) or desorbed and conveyed by means of an inert gas through a capillary tube (4) which does not separate, or separates little, to a detector (5), for a global detection and then a mathematical and/or statistical analysis of the signals obtained, on the occasion of which the signal delivered by the detector proves to be reproducible and in agreement with the results of the sensory analysis.

2. Method according to Claim 1, **characterised in that** the volatile substances, preferably the smell of a food or of an object in its global form, are produced in a head space (1b).

3. Method according to Claim 1 or 2, **characterised in that** the adsorbent surfaces are heated in order to desorb the volatile substances.

4. Method according to any of Claims 1 to 3, **characterised in that** the signals obtained (7) are interpreted by measuring their intensity and/or their shape.

5. Device for measuring global volatiles using the method according to any of Claims 1 to 4, **characterised in that** it comprises a head space (1b) for releasing the volatile substances, a system (2) for collecting these volatile substances, a desorption system (3) adapted to the collection system (2), a detection system (5) and an evaluation system (6) for interpreting the signals obtained (7).

6. Device according to Claim 5, **characterised in that** the system (2) for collecting the volatiles is based on at least one of SPME (Solid Phase Micro Extraction), membranes, "purge and trap" adsorbent systems, adsorbent tubes or chemically modified surfaces.

7. Device according to Claim 5 or 6, **characterised in that**, for an SPME system, the desorber (3) is an injector with septum.

8. Device according to one of Claims 5 to 7, **characterised in that** the thermal desorber is a salting-out system, preferably programmable.

9. Device according to one of Claims 5 to 8, **characterised in that** the detector is of the flame ionization detector, thermal conductivity, differential resistivity, phosphorus nitrogen, electron capture or mass spectrometry type.
